# FASCICULE DE BREVET EUROPEEN

(11) **EP 2 923 461 B1**
(45) Date de publication et mention de la délivrance du brevet: **11.12.2019**
(21) Numéro de dépôt: 13777067.3
(22) Date de dépôt: 16.10.2013
(51) Int. Cl.: H04L 12/891, H04L 12/863

(54) **DISPOSITIF ET PROCÉDÉ DE RETRANSMISSION DE DONNÉES DANS UN COMMUTATEUR RÉSEAU**
VORRICHTUNG UND VERFAHREN ZUR WIEDERHOLTEN DATENÜBERTRAGUNG IN EINER NETZWERKVERMITTLUNG
DEVICE AND METHOD FOR RETRANSMITTING DATA IN A NETWORK SWITCH

(30) Priorité: 23.11.2012 FR 1261152
(43) Date de publication de la demande: 30.09.2015
(73) Titulaire: COMMISSARIAT À L'ÉNERGIE ATOMIQUE ET AUX ÉNERGIES ALTERNATIVES, 75015 Paris (FR)
(72) Inventeur: JAN, Mathieu, F-91600 Savigny-sur-Orge (FR); DAVID, Vincent, F-91460 Marcoussis (FR)
(74) Mandataire: Lopez, Frédérique
(86) Numéro de dépôt international: PCT/EP2013/071649
(87) Numéro de publication internationale: WO 2014/079629

(56) Documents cités:
- US-A1- 2005 152 359
- US-A1- 2009 201 898
- US-B1- 6 721 334

## Description

### Domaine de l'invention

L'invention concerne le domaine de la transmission de données dans les réseaux de communication et en particulier dans les réseaux distribués temps réel critique.

### Etat de la Technique

Dans les systèmes distribués temps réel critique, les flux de données réseau comportant un ensemble de trames réseaux ont des contraintes de bout en bout à respecter entre la production des données depuis un équipement émetteur et la consommation des données par un équipement récepteur. Lors de la conception de tels systèmes, ces contraintes doivent être respectées et les ressources réseaux doivent être correctement dimensionnées par rapport aux besoins applicatifs. Selon l'architecture utilisée pour mettre en œuvre la transmission des flux de données, le dimensionnement peut porter :
- sur la durée des plages d'émission allouées aux différents équipements du système distribué, lorsque la topologie réseau nécessite la mise en place d'un arbitrage des accès des équipements au réseau de communication, comme par exemple sur un bus de données géré via une politique d'accès de type accès multiple réparti dans le temps connu sous l'anglicisme « Time Division Multiple Access » (TDMA) ; ou
- sur la taille des files d'attentes au sein des commutateurs réseau lorsque le fonctionnement du système s'appuie sur un réseau commuté, comme par exemple dans le cas de l'Ethernet commuté full-duplex.

Toutefois, pour concevoir des systèmes distribués temps réel critique qui contiennent au moins trois nœuds réseau avec les architectures existantes, il est nécessaire de surdimensionner les ressources réseau quelque soit le dimensionnement déjà réalisé pour satisfaire aux contraintes de bout en bout, le surdimensionnement augmentant rapidement avec le nombre de noeuds. En effet, le dimensionnement des plages d'émission, lorsqu'un arbitrage vis-à-vis de l'accès au réseau par un équipement est nécessaire, s'appuie sur l'hypothèse d'une horloge globale commune entre les différents équipements pour pouvoir partager correctement l'accès aux ressources réseau. Or, chaque équipement disposant de sa propre horloge, l'horloge globale commune est approximée en définissant une borne acceptable pour les différentes horloges des équipements, appelée précision de synchronisation. Plus la précision est importante, plus les incertitudes sur les instants d'échange de données sont faibles et donc meilleure est l'utilisation de la bande passante. Lorsque le nombre d'équipements grandit, la précision diminue et l'exploitation de la bande passante diminue nécessitant alors un surdimensionnement des capacités réseau. Dans le cas du dimensionnement des files d'attentes de commutateurs réseau, il existe un très grand nombre d'états possibles de ces files d'attentes des différents commutateurs du réseau lors de la vérification du respect des contraintes de bout en bout pour l'ensemble des flux de données applicatifs. La solution vis-à-vis de la taille nécessaire de ces files est soit largement pessimiste, et nécessitant alors un surdimensionnement important des ressources, ou bien peut être exacte mais sur des tailles de système relativement faibles. Ainsi, les capacités d'un réseau de communication nécessaires pour l'exécution des systèmes distribués temps réel critiques doivent être surdimensionnées, ce qui augmente le coût de mise en œuvre de tels systèmes.

Par ailleurs, indépendamment de la politique de retransmission utilisée au sein d'un commutateur, que ce soit en mode direct ou différé par exemple, les commutateurs actuels ne considèrent pas le contenu applicatif des trames réseaux. Ainsi, la partie applicative d'une trame réseau est vue comme une boite noire dont le contenu est intégralement retransmis sur un ensemble de ports du commutateur réseau, en fonction du fait qu'il s'agisse d'une trame de type unicast, multicast ou broadcast. Or, l'intégralité du contenu applicatif d'une trame n'intéresse pas forcément l'ensemble des équipements destinataires d'une trame de type multicast ou broadcast. Par exemple, il est possible que les destinataires de trames réseau au sein d'un domaine réseau tel qu'un ensemble d'équipements connectés en bus sur un port du commutateur, n'utilisent qu'une partie du contenu applicatif des trames reçues par le commutateur. De plus, chaque partie du contenu applicatif d'une trame réseau utile à un équipement peut être différent d'un équipement à l'autre. Il est également possible qu'une partie du contenu applicatif d'une trame ne soit utilisée par aucun des équipements destinataires d'un domaine réseau, mais en revanche par des équipements destinataires d'un autre domaine réseau, justifiant du fait dans les solutions actuelles l'inclusion de données inutiles pour un domaine réseau, cette partie de trame occupant alors inutilement de la bande passante du réseau. En conséquence, l'efficacité réelle de la transmission réseau, qui est le rapport entre la quantité de données applicatives transmises et la taille de la trame, est donc réduite. Par ailleurs, la latence d'envoi d'une telle trame est augmentée de manière également inutile, cela étant particulièrement accentué si la somme des données réellement utiles au domaine réseau constitué est réduite.

Actuellement, pour assurer le fait que les données présentes dans une trame soient intégralement utiles à un domaine réseau, il faut construire un ensemble de trames réseau contenant chacune uniquement les données nécessaires au domaine réseau considéré. Cela nécessite d'augmenter le nombre de trames émises avec comme conséquence de diminuer leur taille mais également d'augmenter le nombre de préambules et postambules des trames. De même, le nombre de périodes d'inactivité minimale entre deux trames, périodes appelées en anglais « interframe gap », est également augmenté. Pour toutes ces raisons, l'utilisation de la bande passante réseau est donc diminuée.

Par exemple le brevet US6721334 divulgue un système permettant de combiner des paquets adressés à la même destination afin de réduire l'intervalle entre paquets.

En outre, le brevet US2009/0201898 décrit un système pour insérer des paquets dans une trame agrégée en cours de transfert vers la même destination.

Ainsi, les méthodes actuelles de retransmission de données par un commutateur réseau entrainent une sous-utilisation des capacités des réseaux connectés aux commutateurs.

Il existe alors le besoin d'une solution qui permette à la fois de vérifier le respect de contraintes de bout en bout pour la diffusion de données tout en exploitant au mieux les capacités d'un réseau temps réel distribué.

La présente invention répond à ce besoin.

### Résumé de l'invention

Un objet de la présente invention est de fournir un procédé permettant de garantir que seules les données nécessaires à un domaine réseau d'un commutateur réseau transitent sur ce même domaine réseau.

La présente invention permet de vérifier le respect des contraintes temporelles de bout en bout associées aux données et d'exploiter au mieux les capacités du réseau.

Avantageusement, l'invention permet la retransmission de trames réseau via un désassemblage des trames reçues et un réassemblage des données applicatives au sein de nouvelles trames réseaux en s'appuyant sur la connaissance (acquise de manière statique ou dynamique) de la structuration de la charge applicative des trames et les besoins (acquis de manière statique) en termes de consommation par chacun des domaines réseaux connecté à un commutateur réseau.

Avantageusement, l'invention permet d'augmenter le débit réseau atteint. Ainsi pour des données applicatives issues de domaines réseau potentiellement différents, éventuellement reçus à instants différents, ces données peuvent être utilisées pour former de nouvelles trames.

Avantageusement, l'invention permet de construire des paquets d'une taille capable d'exploiter au mieux les capacités du réseau tout en assurant le fait que les données présentes dans une trame soient intégralement utiles à un domaine réseau.

Avantageusement, des émissions successives de trames réseau de petite taille peuvent être remplacées par l'émission de trames de taille plus importante permettant une efficacité optimum au niveau applicatif de la transmission ainsi obtenue.

Un autre objet de la présente invention est de pouvoir ajouter facilement des équipements sur un domaine réseau. La récupération des valeurs des données utiles à l'équipement ajouté se fait uniquement par l'envoi d'une requête au commutateur réseau et non comme dans les solutions existantes par l'envoi de requêtes à l'intégralité des équipements avec lesquelles l'équipement ajouté communique.

Toujours avantageusement mais sans limitation, l'invention trouvera des applications dans les domaines industriels nécessitant la résolution de calculs complexes et parallèles, par exemple de simulation numérique en mécanique de structure. En particulier, la présente invention trouve avantage pour ce type d'applications s'exécutant sur une grille de calculs, c'est-à-dire des grappes de machines interconnectées par des réseaux haute performance relié par des commutateurs.

Pour obtenir les résultats recherchés, un procédé, un système et un produit programme d'ordinateur sont proposés.

En particulier, dans un réseau de communication comprenant une pluralité de domaines réseaux interconnectés par des commutateurs, un procédé mis en œuvre par ordinateur pour transmettre des données d'un domaine réseau émetteur vers au moins un domaine réseau récepteur, comprend les étapes de :
- recevoir sur un commutateur réseau au moins une trame entrante de données d'un domaine réseau émetteur;
- identifier dans la au moins une trame reçue les données correspondant à un ou plusieurs domaines réseaux destinataires;
- écrire chacune des dites données identifiées dans une zone mémoire assignée du commutateur réseau ;
- construire au moins une trame sortante de données pour chaque domaine réseau destinataire, la dite au moins une trame sortante comprenant uniquement des données identifiées pour le dit domaine réseau destinataire; et
- envoyer la dite au moins une trame sortante de données vers le dit domaine réseau destinataire.

Dans une implémentation préférentielle, le procédé permet de recevoir une trame entrante sur au moins un port récepteur du commutateur réseau et d'envoyer les trames sortantes sur un ou plusieurs ports émetteurs du commutateur réseau.

Dans un mode de réalisation, l'étape d'identification des données consiste à analyser la structure de la trame entrante et déterminer les champs correspondants aux données.

Avantageusement, les champs des données peuvent être de longueurs prédéfinies ou identifiés par un identifiant unique.

Dans un autre mode de réalisation, le procédé permet de transférer les données identifiées d'un ou plusieurs contrôleurs d'accès direct à la mémoire (DMA selon l'acronyme anglais) vers chaque zone mémoire assignée du commutateur.

Dans un autre mode de réalisation, le procédé permet de transférer chacune des données écrites vers un ou plusieurs contrôleurs d'accès direct à la mémoire.

Dans un autre mode de réalisation, l'étape de construire une trame sortante consiste à créer un entête de trame et ajouter l'ensemble ou une partie des données stockées dans la zone mémoire assignée au domaine réseau correspondant.

Dans un autre mode de réalisation, le procédé permet de recevoir une requête d'envoi de données par un équipement d'un domaine réseau destinataire avant d'envoyer la trame sortante correspondante.

Dans une variante, l'étape d'envoi des trames sortantes est opérée à des instants pré-calculés.

Avantageusement, le procédé permet que les étapes de construction de la trame sortante et d'envoi soient asynchrones des étapes de réception, d'identification et d'écriture.

Avantageusement, le procédé permet de traiter des trames entrantes qui peuvent être des trames de type 'multicast' ou 'broadcast' selon l'anglicisme consacré.

Avantageusement, le procédé peut être opéré dans un réseau de communication par un système comprenant des moyens pour mettre en œuvre toutes les étapes du procédé.

Avantageusement, ce système est un commutateur réseau.

Avantageusement, le procédé peut être mis en œuvre par ordinateur et disponible sous forme d'un produit programme d'ordinateur comprenant des instructions de code permettant d'effectuer toutes les étapes du procédé, lorsque ledit programme est exécuté sur un ordinateur.

### Description des figures

Différents aspects et avantages de l'invention vont apparaitre en appui de la description d'un mode préféré d'implémentation de l'invention mais non limitatif, avec référence aux figures ci-dessous :
La figure 1 est une représentation topologique d'une infrastructure réseau dans laquelle implémenter avantageusement l'invention ;
La figure 2 est un schéma simplifié de la retransmission d'une donnée au sein d'un commutateur réseau selon la méthode de la présente invention ;
La figure 3 illustre un regroupement de données depuis des trames réseau provenant de domaines réseau différents selon la méthode de la présente invention ;
La figure 4 montre schématiquement l'architecture d'un commutateur réseau dans une implémentation préférentielle de l'invention ;
La figure 5 montre un enchainement des étapes opérées lors de la réception d'une trame par un commutateur réseau ;
La figure 6 montre un enchainement des étapes opérées lors de l'émission d'une trame par un commutateur réseau.

### Description détaillée de l'invention

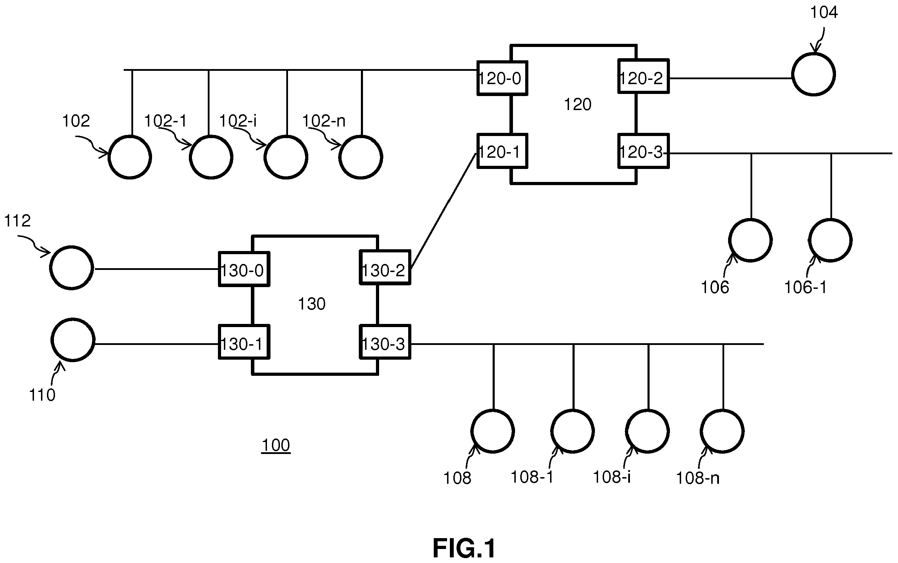

L'invention s'applique avantageusement dans un réseau temps réel distribué critique (100) tel que montré schématiquement sur la figure 1.

Le réseau (100) comprend une pluralité d'équipements (102, 104, 106, 108, 110, 112) interconnectés par des commutateurs (120, 130). Pour des raisons de simplicité de description et non de limitation de l'invention, l'exemple de la figure 1 ne montre qu'un nombre fini d'équipements et de commutateurs, mais l'homme du métier appliquera les principes décrits pour la présente invention à un réseau étendu comprenant une pluralité de nœuds, de commutateurs et différents types d'équipements. Un équipement peut-être tout type d'ordinateur ou autre unité constitué d'un processeur de calcul, tel qu'un microcontrôleur par exemple, et ayant une ou plusieurs interfaces réseau, tel qu'une interface de type Ethernet par exemple.

Certains équipements (102-i) peuvent être interconnectés via des brins réseau qui peuvent être des bus, d'autres équipements (104, 110, 112) peuvent être directement connectés à un commutateur (120, 130). Cependant d'autres topologies réseau supportent les principes de la présente invention, tel que par exemple des commutateurs directement reliés entre eux (120-1, 130-2).

Les commutateurs réseau (120, 130) comprennent des ports réseau (120-0, 120-1, 120-2, 120-3) et (130-0, 130-1, 130-2, 130-3). Chaque commutateur peut être équipé d'un nombre différents de ports réseaux, l'exemple montré sur la figure 1 n'étant que pour des aspects de simplification et non de limitation. Les ports réseau peuvent être des ports récepteurs et/ou émetteurs permettant de connecter des brins réseaux pour communiquer avec les équipements.

Un applicatif réparti sur un réseau temps réel distribué comme celui de la figure 1, peut avoir des données produites par un équipement émetteur (102) appartenant à un domaine réseau producteur, et devant être acheminées vers un ou plusieurs équipements récepteurs (106-1, 108-n, 110) qui peuvent appartenir à un ou plusieurs domaines réseau consommateur. Par application des principes de l'invention, tels que nous allons les décrire plus en détail, la vérification du fait que les délais d'acheminement réels des données, noté Δt_{réel}, sont inférieures aux exigences de contrainte de bout en bout entre la production des données et leur consommation (noté Δt_{spec}) peut être réalisée.

Des exemples non limitatifs d'applicatifs bénéficiant des principes de l'invention sont par exemple, des équipements électroniques embarqués au sein d'un avion pour assurer le pilotage automatique ou la navigation, ou bien des équipements électroniques embarqués au sein d'un véhicule (train ou automobile) pour assurer la gestion de l'injection ou l'aide au freinage par exemple.

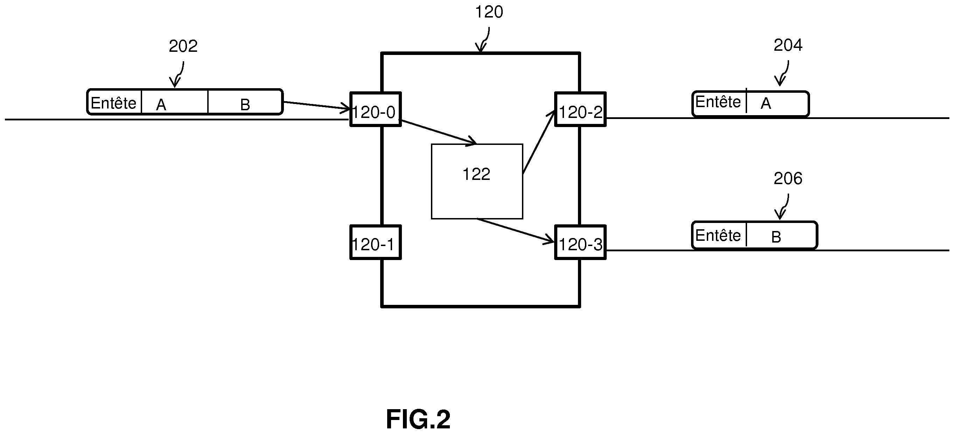

La figure 2 montre sur un schéma simplifié, un exemple de retransmission de données au sein d'un commutateur réseau selon la méthode de la présente invention.

Une trame réseau (202) provenant d'un domaine réseau producteur contient un entête et des données A et B. La trame est reçue sur un port récepteur (120-0) du commutateur réseau (120). La donnée A est consommée uniquement par un domaine réseau consommateur connecté à un port émetteur (120-2) du commutateur réseau. La donnée B est consommée uniquement par un domaine réseau consommateur connecté à un autre port émetteur (120-3) du même commutateur réseau. Selon les principes de l'invention, les données (A, B) vont être extraites de la trame réseau reçue (202) pour être stockées indépendamment au sein d'une mémoire du commutateur réseau. Une nouvelle trame (204) contenant un entête et uniquement la donnée A va être constituée afin qu'elle soit émise par le port émetteur (120-2) couplé au domaine réseau consommateur de la donnée A. De manière similaire, une autre trame (206) contenant un entête et uniquement la donnée B va être constituée afin qu'elle soit émise par le port émetteur (120-3) couplé au domaine réseau consommateur de la donnée B. Les nouvelles trames (204, 206) sont générées à partir des valeurs des données A et B stockées dans la mémoire centrale du commutateur.

Les données stockées dans la mémoire centrale du commutateur sont identifiées de manière unique. Un identifiant pour les données peut par exemple être un nombre. Dans une première variante où il est possible de disposer d'une connaissance statique des trames reçues et de leur structure telle que l'offset et les longueurs des données dans chacune des trames, il n'est pas nécessaire d'inclure des identifiants supplémentaires de données dans le format des trames.

Dans une seconde variante, les trames reçues incluent un identifiant dédié à chaque donnée afin de permettre de les identifier dans la trame. Le commutateur utilise chaque identifiant pour construire les transferts depuis le port de réception vers la mémoire centrale.

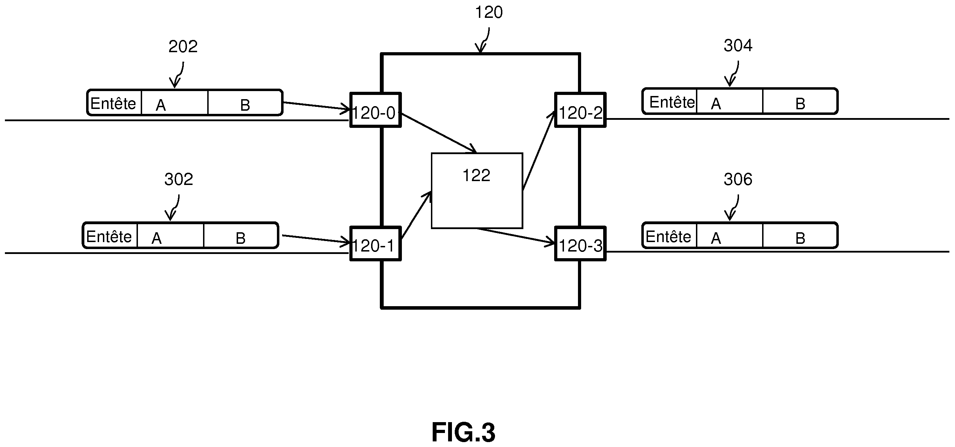

La figure 3 illustre un exemple de regroupement de données par domaine réseau consommateur selon la méthode de la présente invention pour des trames réseau provenant de domaines réseau producteurs différents. Un commutateur réseau (120) reçoit sur un premier port (120-0) une première trame réseau (202) provenant d'un domaine réseau producteur et une seconde trame réseau (302) sur un second port (120-1). La première trame contient un entête et des données A et B. La seconde trame contient un entête et des données C et D. Les données A et C sont consommées par un même domaine réseau consommateur connecté à un port émetteur (120-2) du commutateur réseau. Les données B et D sont consommées par un même domaine réseau consommateur connecté à un autre port émetteur (120-3) du même commutateur réseau.

Comme décrit pour l'exemple de la figure 2, selon les principes de l'invention, les données (A, B, C, D) vont être extraites de chaque trame réseau pour être stockées indépendamment au sein d'une mémoire du commutateur réseau. Deux nouvelles trames vont être générées (304, 306) contenant un entête et respectivement les données appropriées (A, C) et (B, D) pour être émises depuis le port émetteur correspondant au domaine réseau concerné.

L'homme du métier appréciera que seuls deux exemples aient été choisis pour illustrer les principes de l'invention, mais que ceux-ci s'appliquent pour construire tout type de trames à partir d'une ou plusieurs trames reçues.

De manière avantageuse, dans une variante, le procédé de l'invention permet au commutateur d'attendre de disposer d'un certain nombre de données utiles à un domaine réseau avant de constituer les trames réseau nécessaires qui seront émises vers le domaine réseau destinataire. Cette attente peut également être en fonction du delta de temps calculé à priori avant l'exécution d'un système distribué temps réel, tout en respectant les contraintes temporelles de bout en bout qui seraient spécifiées pour l'ensemble des flux concernés.

Ainsi, cette capacité permet d'optimiser l'utilisation de la bande passante via l'empaquetage dans une même trame de données ayant des instants de réémission proches, et donc d'éviter la construction et l'émission de plusieurs trames de plus petites tailles.

Toujours avantageusement, la présente invention permet facilement l'ajout de nouveaux équipements dans un système distribué puisque les données utiles à un nouvel équipement peuvent être disponibles directement sur le commutateur réseau sans impliquer de modifications des autres équipements.

Un système distribué peut également être conçu pour fonctionner selon les principes de l'invention où le commutateur reçoit des requêtes de demandes de données qu'il doit honorer, les différents équipements connectés au commutateur n'ayant dans ce cas pas besoin de connaître ni l'émetteur ni la localisation des producteurs des données. La capture de l'état interne du système transitant par le réseau est également possible par consultation des valeurs des données disponibles au niveau du commutateur réseau. Cela peut par exemple faciliter la définition d'états de sauvegarde d'un système en vue de sa restauration si une erreur intervenait de manière ultérieure.

De manière optionnelle, le procédé de l'invention peut être appliqué uniquement à un sous-ensemble des trames réseaux transitant par un commutateur réseau de données en utilisant un champ d'identification du type de trame dans l'entête du protocole utilisé au niveau liaison du modèle OSI d'interconnexion en réseau des systèmes ouverts. Un exemple est d'utiliser le champ « type de protocole » de l'entête d'une trame Ethernet. Ainsi, un même commutateur réseau peut traiter des trames selon un procédé de retransmission déjà connu et par ailleurs traiter des trames sur l'allocation par domaine réseau selon les principes de l'invention.

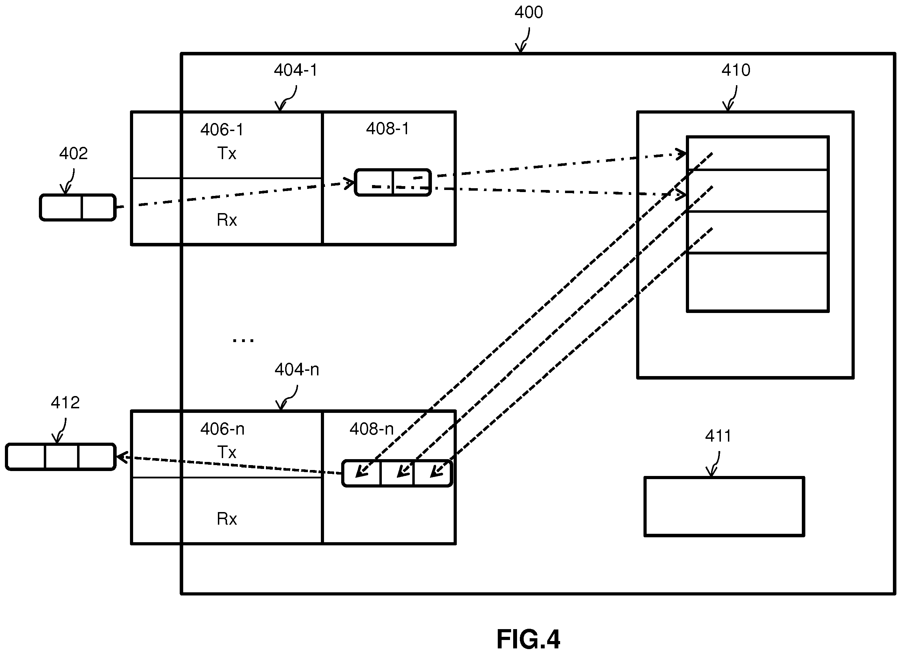

La figure 4 montre schématiquement l'architecture d'un commutateur réseau dans une implémentation préférentielle de l'invention. Un commutateur réseau (400) est constitué de '*n*' ports émetteur/récepteur (404-1 à 404-n). Chaque port comporte un contrôleur réseau (406-1 à 406-n). Le commutateur réseau comprend de plus une mémoire centrale (410) et d'un contrôleur principal (411). Chaque contrôleur réseau a sa propre capacité de transmission de trames réseau (noté Tx sur la figure), et sa propre capacité de réception de trames réseau (noté Rx sur la figure). Chaque contrôleur réseau est de plus couplé à un contrôleur d'accès direct à la mémoire (408-1 à 408-n) connu aussi sous l'anglicisme « Direct Memory Access (DMA) Controller». Le contrôleur DMA est en charge de faire les transferts de données de et vers la mémoire centrale du commutateur et le contrôleur réseau, sous le contrôle du processeur (411).

L'homme de l'art comprendra que l'architecture décrite est schématique afin d'illustrer le procédé de l'invention mais n'est en rien limitative de son implémentation. En particulier, l'implémentation est dépendante des capacités du contrôleur DMA associé au contrôleur réseau. Ainsi, dans des variantes d'implémentation, un contrôleur DMA peut offrir une capacité à disperser ou assembler des données décrites dans des requêtes DMA chainées. Dans une autre variante, pour pallier à l'absence de cette dernière fonctionnalité sur le contrôleur DMA associé au contrôleur réseau, un contrôleur DMA additionnel peut être couplé au contrôleur existant.

La mémoire centrale (410) stocke les données qui transitent via le commutateur réseau. La structure des trames reçues (402) est analysée au niveau liaison de données, pour que les données stockées soient réparties dans la mémoire centrale du commutateur, via des transferts DMA (408-1) entre les contrôleurs réseau (406-1) et la mémoire centrale sous la responsabilité du contrôleur principal (411). Alternativement, cette analyse des trames reçues peut se faire à des niveaux supérieurs du niveau liaison de données dans une variante d'implémentation au sein d'un routeur par exemple.

A partir des données présentes dans la mémoire centrale, les trames vont être constituées par le contrôleur principal, via les contrôleurs DMA (408-n) pour être émises (412) par les contrôleurs réseau (406-n).

Dans des variantes d'implémentation de la mémoire centrale, avantageusement la présente invention permet de différencier plusieurs valeurs de données, en associant par exemple une date de mise à disposition souhaitée à des consommateurs, sans toutefois nécessiter la synchronisation des différentes bases de temps utilisées par les brins réseau.

Toujours avantageusement, afin de gérer les accès concurrents à une donnée, un tampon de stockage de l'ensemble des couples (valeur de la donnée, date de mise à disposition) d'une donnée peut être défini.

Avantageusement, la mémoire centrale peut être organisée en '*n*' blocs mémoire, '*n*' étant égal au nombre de contrôleurs réseau. Chaque bloc mémoire est de manière préférentielle contigu en mémoire afin de définir une unique région mémoire. Lors de la réception d'une trame réseau par un contrôleur réseau, les accès mémoires sur la région mémoire dédiée à ce contrôleur sont en écriture, les accès sur les autres blocs mémoire étant bloqués pour interdire des opérations de lecture ou d'écriture. Lors de l'émission d'une trame réseau, les accès mémoires sur l'ensemble des blocs mémoires du commutateur sont positionnés en lecture seulement. Ainsi, seul un domaine réseau producteur d'une donnée est autorisé à la modifier, sécurisant les données échangées par le commutateur.

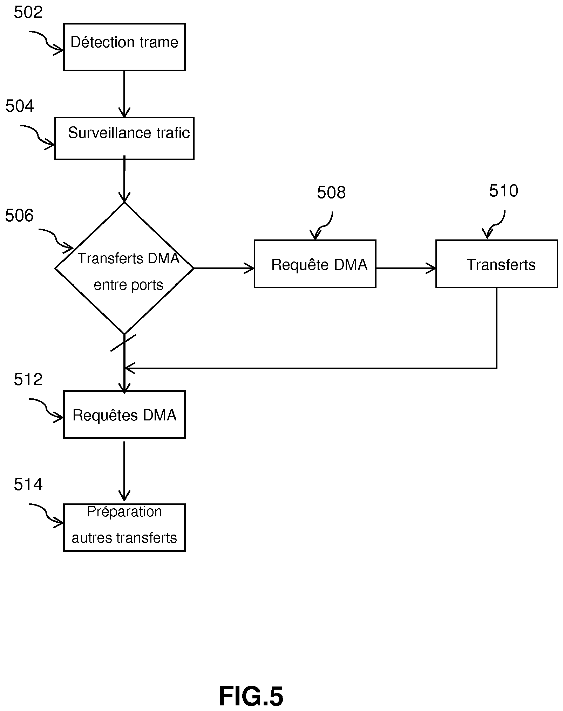

La figure 5 montre l'enchainement des étapes opérées lors de la réception d'une trame par un commutateur réseau.

La réception d'une trame réseau est détectée (502) par le commutateur au niveau de la capacité de réception (Rx) du contrôleur réseau. Cette détection se fait par exemple via la génération d'une interruption auprès du processeur ou suite à la consultation par le processeur de l'état d'un registre du contrôleur réseau. Le contrôleur principal (411) identifie par quel procédé de retransmission la trame reçue doit être traitée, par le procédé de retransmission de la présente invention ou par un procédé alternatif. L'identification du procédé à sélectionner peut de manière préférentielle s'implémenter en positionnant une valeur particulière dans le champ « type de protocole » d'une trame Ethernet, si par exemple le réseau sous-jacent utilise le protocole Ethernet au niveau liaison du modèle OSI.

Dans une étape optionnelle (504), une surveillance du trafic réseau reçu peut être mise en place. Par exemple, une connaissance statique des trames réseau à recevoir sur un port peut-être utilisée pour vérifier que la trame reçue a été émise par le bon équipement, dans un intervalle de temps calculé et avec une structure applicative correcte.

A l'étape suivante (506), le procédé teste si une partie des données d'une trame reçue doit être recopiée sur d'autres ports réseau du commutateur devant émettre des trames contenant ces données. Si oui, des requêtes DMA de type « périphérique vers périphérique » sont générées (508) pour réaliser les transferts correspondants (510). Si non, le procédé se poursuit à l'étape 512.

Avantageusement, ces requêtes permettent d'accélérer la retransmission des données ainsi transférées si les contraintes temporelles appliquées à ces données ne sont pas compatibles avec un transfert de celles-ci par la mémoire centrale du commutateur. Le délai restant par rapport à une mise à disposition à des consommateurs peut être utilisé pour décider d'utiliser ou non cette étape optionnelle du procédé.

A l'étape suivante (512), les requêtes DMA nécessaires à l'extraction des données applicatives présentes dans la trame réseau reçue et le stockage au sein de la mémoire centrale du commutateur sont préparées par le contrôleur principal (411). Les transferts DMA sont déclenchés par le contrôleur principal. Dans les cas d'implémentation où il est possible de disposer d'une connaissance temporelle statique des trames à recevoir et de leur structure (offsets et longueurs des données dans chacune des trames), la préparation des requêtes DMA peut être réalisée avant la réception de la trame. Un exemple est pour le cas de la gestion des accès réseau par les équipements connectés à un port réalisée par la technique d'accès multiple à répartition dans le temps (TDMA) .

Dans une autre variante, afin d'identifier les données d'une trame, la charge applicative de la trame est structurée comme une suite de couple (entêtes de données de taille fixe identifiant la donnée et indiquant la taille d'une donnée, donnée correspondante). L'analyse de ces entêtes de données permet de construire les requêtes DMA nécessaires. Le contrôleur DMA notifie au contrôleur principal la fin des transferts de données entre le contrôleur réseau et la mémoire centrale du commutateur. Les requêtes DMA peuvent être réutilisées pour décrire d'autres demandes de transferts de données. En fonction du nombre de données à transférer et du nombre de requêtes DMA disponibles, cette étape peut se répéter pour traiter intégralement une trame réseau reçue.

Dans une étape suivante (514), les requêtes DMA disponibles et libérées peuvent être utilisées pour décrire les prochains transferts de données à réaliser lors de la réception de la prochaine trame réseau. Cette étape du procédé est présente uniquement si l'implémentation choisie du procédé permet d'avoir une connaissance statique des trames réseaux qui seront reçues.

L'homme du métier comprendra que différentes mises en œuvre sont possibles pour établir les requêtes DMA qui sont dépendantes des capacités du contrôleur DMA du contrôleur réseau. Par exemple, si un contrôleur DMA n'offre pas de capacité à disperser une trame réseau à différent endroits via une liste chaînée de requêtes DMA, le contrôleur DMA du contrôleur réseau est utilisé par le contrôleur principal pour recopier la trame dans une zone mémoire intermédiaire dans la mémoire centrale du commutateur. A la fin de ce transfert DMA, l'identification des données sera réalisée par le contrôleur principal ainsi que la construction de l'ensemble de transferts DMA nécessaires pour disperser les données dans la mémoire centrale du commutateur par un autre contrôleur DMA. Si le contrôleur DMA offre une capacité de type disperser/assembler ou « scatter/gather » en anglais une zone mémoire, celle-ci peut être directement utilisée par le contrôleur principal pour stocker les données dans la mémoire centrale du commutateur. La stratégie d'arbitrage entre les différentes requêtes DMA des différents contrôleurs DMA permet de caractériser le comportement temporel des échanges afin de maîtriser leur impact sur la vérification des contraintes de bout en bout associées aux données.

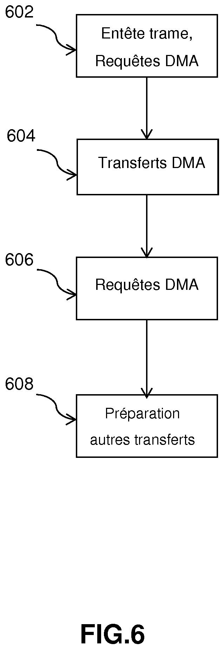

La figure 6 montre les différentes étapes opérées pour l'émission d'une trame réseau. Dans une première étape (602), l'entête de la trame à émettre est construit par le contrôleur principal, ainsi que l'ensemble des requêtes DMA nécessaires pour réaliser les transferts de données depuis la mémoire centrale du contrôleur principal vers le contrôleur réseau du commutateur devant émettre la trame.

Si la solution d'implémentation choisie permet de disposer d'une connaissance statique de trames à émettre et de leur structure (offsets et longueurs des données dans chacune des trames), cette étape peut être une étape préalable réalisée avant l'émission de la trame.

A l'étape suivante (604), le contrôleur principal initie le ou les transferts DMA préparés soit à l'étape précédente (602) ou préalablement. Les données à inclure dans la trame réseau sont transférées depuis la mémoire centrale du commutateur vers le contrôleur réseau en charge de l'émission afin remplir la partie applicative de la trame réseau.

Le contrôleur DMA du contrôleur réseau notifie au contrôleur principal la fin des transferts de données entre la mémoire centrale du commutateur et le contrôleur réseau. Les requêtes DMA peuvent être réutilisées pour décrire d'autres demandes de transferts de données. En fonction du nombre de données à transférer et du nombre de requêtes DMA disponibles, cette étape peut se répéter pour construire intégralement une trame réseau à émettre. Différentes mises en œuvre sont possibles qui sont dépendantes des capacités du contrôleur DMA du contrôleur réseau.

A l'étape suivante (606), lorsque la fin des transferts DMA est détectée par le contrôleur DMA, l'émission de la trame est demandée au contrôleur réseau. De manière optionnelle et similaire à la phase de réception, une surveillance du trafic réseau émis peut être mise en place.

Dans une étape suivante (608), les requêtes DMA disponibles et libérées à l'étape précédente peuvent être utilisées pour décrire les prochains transferts de données à réaliser lors de la réception de la prochaine trame réseau. Cette étape du procédé est présente uniquement si l'implémentation choisie du procédé permet d'avoir une connaissance statique des trames réseaux qui seront émises.

Les figures 5 et 6 décrivent des étapes du procédé pour la réception et l'émission d'une trame réseau. Dans une variante, le procédé peut choisir d'attendre de recevoir un certain nombre de trames réseaux avant de déclencher les étapes du procédé en réception.

Il est à noter que le procédé décrit est indépendant du type de contrôleur réseau embarqué par le commutateur réseau, qui peut par exemple être un contrôleur Ethernet, un contrôleur CAN « Controller Area Network » en anglais ou un contrôleur FlexRay™. Par ailleurs, il est possible d'avoir différents type de contrôleur réseau dans un même commutateur réseau, le stockage des données dans la mémoire centrale du commutateur étant réalisé de manière indépendante de la couche liaison de données utilisée. Ainsi, le présent procédé est compatible avec la notion passerelle dans une architecture distribuée dans laquelle les données transitant via un protocole données sont retransmis via un autre protocole. Enfin, optionnellement des étapes de traitement d'erreurs peuvent être nécessaires. Toutefois, les actions à exécuter lorsqu'une erreur a été identifiée qui sont liées à la mise en œuvre du procédé ne sont pas décrites.

La présente invention peut s'implémenter à partir d'éléments matériel et/ou logiciel. Elle peut être disponible en tant que produit programme d'ordinateur sur un support lisible par ordinateur. Le support peut être électronique, magnétique, optique, électromagnétique ou être un support de diffusion de type infrarouge. De tells supports sont par exemple, des mémoires à semi-conducteur (Random Access Memory RAM, Read-Only Memory ROM), des bandes, des disquettes ou disques magnétiques ou optiques (Compact Disk - Read Only Memory (CD-ROM), Compact Disk - Read/Write (CD-R/W) and DVD).

Ainsi la présente description illustre une implémentation préférentielle de l'invention, mais n'est pas limitative. Un exemple a été choisi pour permettre une bonne compréhension des principes de l'invention, et une application concrète, mais il n'est en rien exhaustif et doit permettre à l'homme du métier d'apporter des modifications et variantes d'implémentation en conservant les mêmes principes.

## Revendications

1. Procédé mis en œuvre par ordinateur dans un commutateur réseau pour transmettre des trames de données d'un domaine réseau émetteur vers au moins un domaine réseau récepteur, le commutateur réseau comprenant au moins une mémoire centrale, des ports réseaux récepteurs et des ports réseaux émetteurs, le procédé comprenant les étapes de :
- recevoir sur un port réseau récepteur au moins une trame entrante de données d'un domaine réseau émetteur, la trame entrante ayant un entête et une charge de données applicatives;
- identifier dans la charge de données applicatives de la au moins une trame reçue, chaque partie correspondant à un domaine réseau destinataire différent;
- désassembler la charge de données applicatives pour extraire les données applicatives de chaque partie identifiée ;
- écrire les dites données applicatives de chaque partie dans une zone mémoire assignée de la mémoire centrale du commutateur réseau ;
- attendre une période de temps pour permettre l'accumulation d'un certain nombre de données pour chaque domaine réseau récepteur, ce temps étant calculé a priori avant la réception d'au moins une trame entrante et respectant des contraintes temporelles de bout-en-bout;
- construire une trame sortante de données pour chaque domaine réseau destinataire après ladite période de temps, chaque trame sortante de données comprenant un entête et une charge de données applicatives contenant uniquement des données de la zone mémoire assignée au domaine réseau destinataire correspondant; et
- répartir chaque trame sortante de données vers un port réseau émetteur assigné au domaine réseau destinataire correspondant.

2. Le procédé selon la revendication 1 dans lequel l'étape d'identification des données consiste à analyser la structure de la trame entrante et déterminer les champs correspondants aux données.

3. Le procédé selon la revendication 2 où les champs des données sont de longueurs prédéfinies.

4. Le procédé selon la revendication 2 où les champs des données sont identifiés par un identifiant unique.

5. Le procédé selon l'une quelconque des revendications 1 à 4 comprenant de plus après l'étape de désassemblage, l'étape de transférer les données de chacune des parties identifiées, d'un ou plusieurs contrôleurs d'accès direct à la mémoire (DMA) vers chaque zone mémoire assignée du commutateur.

6. Le procédé selon l'une quelconque des revendications 1 à 5 comprenant de plus avant l'étape de construction, l'étape de transférer les données écrites dans une zone mémoire assignée vers un ou plusieurs contrôleurs d'accès direct à la mémoire.

7. Le procédé selon l'une quelconque des revendications 1 à 6 comprenant de plus avant l'étape d'envoyer la dite au moins une trame sortante, l'étape de recevoir une requête d'envoi de données par un équipement d'un domaine réseau destinataire.

8. Le procédé selon l'une quelconque des revendications 1 à 7 dans lequel l'étape d'envoyer la dite au moins une trame sortante est opérée à des instants pré-calculés.

9. Le procédé selon l'une quelconque des revendications 1 à 8 dans lequel les étapes de construction de la trame sortante et d'envoi sont asynchrones des étapes de réception, d'identification et d'écriture.

10. Le procédé selon l'une quelconque des revendications 1 à 9 dans lequel la dite au moins une trame entrante est une trame selon l'anglicisme de type 'multicast' ou 'broadcast'.

11. Système pour transmettre des trames de données d'un domaine réseau émetteur vers au moins un domaine réseau récepteur, le système comprenant des moyens pour mettre en œuvre les étapes du procédé selon l'une quelconque des revendications 1 à 10.

12. Un commutateur réseau comprenant le système selon la revendication 11.

13. Un produit programme d'ordinateur, ledit programme d'ordinateur comprenant des instructions de code permettant d'effectuer les étapes du procédé selon l'une quelconque des revendications 1 à 10, lorsque ledit programme est exécuté sur un ordinateur.

## Patentansprüche

1. Verfahren, welches computergestützt in einem Netzwerk-Switch zum Übertragen von Datenrahmen von einer Sender-Netzwerkdomäne an mindestens eine Empfänger-Netzwerkdomäne umgesetzt wird, wobei der Netzwerk-Switch mindestens einen zentralen Speicher, Empfänger-Netzwerkports und Sender-Netzwerkports beinhaltet, wobei das Verfahren folgende Schritte beinhaltet:
- Empfangen, an einem Empfänger-Netzwerkport, mindestens eines eingehenden Datenrahmens einer Sender-Netzwerkdomäne, wobei der eingehende Rahmen einen Header und eine Fracht von Applikationsdaten besitzt;
- Identifizieren, in der Fracht von Applikationsdaten, des mindestens einen empfangenen Rahmens, jeden Abschnitts der unterschiedlichen Empfänger-Netzwerkdomäne entspricht;
- Zerlegen der Fracht von Applikationsdaten zum Extrahieren der Applikationsdaten eines jeden identifizierten Abschnitts;
- Schreiben der Applikationsdaten eines jeden Abschnittes in einen zugewiesenen Speicherbereich des zentralen Speichers des Netzwerk-Switchs;
- Abwarten über einen Zeitraum, um die Ansammlung einer bestimmten Anzahl von Daten für jede Empfänger-Netzwerkdomäne zu ermöglichen, wobei diese Zeit a priori vor dem Empfang mindestens eines eingehenden Rahmens berechnet wird und zeitliche Ende-zu-Ende-Zwänge wahrt;
- Konstruieren eines ausgehenden Datenrahmens für jede Empfänger-Netzwerkdomäne nach dem Zeitraum, wobei jeder ausgehende Datenrahmen einen Header und eine Fracht von Applikationsdaten beinhaltet, welche ausschließlich Daten des der entsprechenden Empfänger-Netzwerkdomäne zugewiesenen Speicherbereichs enthält; und
- Verteilen eines jeden ausgehenden Datenrahmens an einen der entsprechenden Empfänger-Netzwerkdomäne zugewiesenen Empfänger-Netzwerkport.

2. Verfahren nach Anspruch 1, bei welchem der Schritt des Identifizierens der Daten darin besteht, die Struktur des eingehenden Rahmens zu analysieren und die den Daten entsprechenden Felder zu bestimmen.

3. Verfahren nach Anspruch 2, bei welchem die Datenfelder vordefinierte Längen besitzen.

4. Verfahren nach Anspruch 2, bei welchem die Datenfelder durch eine einzigartige Kennung identifiziert sind.

5. Verfahren nach einem der Ansprüche 1 bis 4, zudem beinhaltend nach dem Schritt des Zerlegens, den Schritt des Übertragens der Daten eines jeden der identifizierten Abschnitte, einer oder mehrerer Direktspeicherzugriffssteuerungen (DMA), an jeden zugewiesenen Speicherbereich des Switchs.

6. Verfahren nach einem der Ansprüche 1 bis 5, zudem beinhaltend vor dem Schritt des Konstruierens, den Schritt des Übertragens der in einem zugewiesenen Speicherbereich geschriebenen Daten an eine oder mehrere Direktspeicherzugriffssteuerungen.

7. Verfahren nach einem der Ansprüche 1 bis 6, zudem beinhaltend vor dem Schritt des Sendens des mindestens einen ausgehenden Rahmens, den Schritt des Empfangens einer Datensendeanfrage durch eine Ausrüstung einer Empfänger-Netzwerkdomäne.

8. Verfahren nach einem der Ansprüche 1 bis 7, bei welchem der Schritt des Sendens des mindestens einen ausgehenden Rahmens an zuvor berechneten Zeitpunkten durchgeführt wird.

9. Verfahren nach einem der Ansprüche 1 bis 8, bei welchem die Schritte des Konstruierens des ausgehenden Rahmens und des Sendens asynchron gegenüber den Schritten des Empfangens, des Identifizierens und des Schreibens sind.

10. Verfahren nach einem der Ansprüche 1 bis 9, bei welchem der mindestens eine eingehende Rahmen ein Rahmen nach dem Anglizismus vom Typ 'Multicast' oder 'Broadcast' ist.

11. System zum Übertragen von Datenrahmen von einer Sender-Netzwerkdomäne an mindestens eine Empfänger-Netzwerkdomäne, wobei das System Mittel zum Umsetzen der Schritte des Verfahrens nach einem der Ansprüche 1 bis 10 beinhaltet.

12. Netzwerk-Switch, beinhaltend das System nach Anspruch 11.

13. Computerprogrammprodukt, wobei das Computerprogramm Code-Befehle beinhaltet, welche es ermöglichen, die Schritte des Verfahrens nach einem der Ansprüche 1 bis 10 durchzuführen, wenn das Programm auf einem Computer ausgeführt wird.

## Claims

1. A method implemented by computer for transmitting data frames of a sender network domain to at least one receiver network domain, the network switch comprising at least a central memory, receiver network ports and sender network ports, the method comprising the steps of:
- receiving on a network switch at least one incoming frame of data of a sender network domain; the incomimg frame having a header and an application data load;
- identifying in the application data load of the at least one frame received, of each part corresponding to a different addressee network domain;
- disassembling the application data load to extract the application data of each identified part;
- writing said application data of each part in an assigned memory area of the central memory of the network switch;
- waiting a certain time to allow the accumulation of a certain amount of data for each receiver network domain, this time being calculated a priori before the reception of at least one incoming frame and respecting end-to-end time restrictions;
- constructing an outgoing data frame for each addressee network domain after said time period, each outgoing data frame comprising a header and an application data load containing solely data of the memory area assigned to the corresponding addressee network domain; and
- dispatching each outgoing data frame to a sender network port assigned to the corresponding addressee network domain.

2. The method as claimed in claim 1, in which the step of identifying the data consists in analyzing the structure of the incoming frame and determining the fields corresponding to the data.

3. The method as claimed in claim 2, where the fields of the data are of predefined lengths.

4. The method as claimed in claim 2, where the fields of the data are identified by a unique identifier.

5. The method as claimed in any one of claims 1 to 4, moreover comprising after the disassembling step, the step of transferring the data of each of the identified parts of one or more direct memory access (DMA) controllers to each assigned memory area of the switch.

6. The method as claimed in any one of claims 1 to 5, moreover comprising, before the constructing step, the step of transferring the written data in an assigned memory area to one or more direct memory access controllers.

7. The method as claimed in any one of claims 1 to 6, moreover comprising, before the step of dispatching said at least one outgoing frame, the step of receiving a request for dispatching data by an entity of an addressee network domain.

8. The method as claimed in any one of claims 1 to 7, in which the step of dispatching said at least one outgoing frame is effected at precalculated instants.

9. The method as claimed in any one of claims 1 to 8, in which the steps of constructing the outgoing frame and of dispatching are asynchronous with the steps of reception, identification and writing.

10. The method as claimed in any one of claims 1 to 9, in which said at least one incoming frame is a frame according to the so-called "multicast" or "broadcast" type.

11. A system for transmitting data frames from a sender network domain to at least one receiver network domain, the system comprising means for implementing the steps of the method as claimed in any one of claims 1 to 10.

12. A network switch comprising the system as claimed in claim 11.

13. A computer program product, said computer program comprising code instructions making it possible to perform the steps of the method as claimed in any one of claims 1 to 10, when said program is executed on a computer.
